# EUROPÄISCHE PATENTSCHRIFT

(11) **EP 1 459 922 B1**
(45) Veröffentlichungstag und Bekanntmachung des Hinweises auf die Patenterteilung: **05.09.2007**
(21) Anmeldenummer: 03028024.2
(22) Anmeldetag: 06.12.2003
(51) Int. Cl.: B60J 7/22

(54) **Windschott für ein Cabriolet**
Wind barrier for cabriolets
Pare-vent pour cabriolets

(30) Priorität: 18.03.2003 DE 10311837
(43) Veröffentlichungstag der Anmeldung: 22.09.2004
(73) Patentinhaber: Dr.Ing. h.c. F. Porsche Aktiengesellschaft, 70435 Stuttgart (DE)
(72) Erfinder: Schmitt, Hans-Jürgen, 75417 Mühlacker (DE); Fischer, Thomas, 48320 Sylvan Lake (MI) (US); Herczeg, Gabor, 69181 Leimen (DE)

(56) Entgegenhaltungen:
- EP-A- 1 067 001
- DE-A- 10 035 995
- DE-A- 10 131 397
- DE-A- 19 632 352

## Beschreibung

Die Erfindung bezieht sich auf ein Windschott für ein Cabriolet gem. dem Oberbegriff des Patentanspruchs 1.

Aus der gattungsgemäßen DE 196 32 352 A1 geht ein mehrteilig ausgebildetes Windschott für ein Cabriolet hervor, wobei ein Mittelteil des Windschotts in seiner aufrechten Betriebsstellung zwischen beabstandeten Bügelabschnitten eines Überrollbügels angeordnet und über lösbare Rastverbindungen am Überrollbügel in Lage gehalten ist. Jede Rastverbindung umfaßt ein am Überrollbügel befestigtes Aufnahmeteil, das verrastend mit einem seitlich abgestellten Halteabschnitt des Mittelteils zusammenwirkt. Ferner umfaßt jede Rastverbindung einen schwenkbar gelagerten federbeaufschlagten Rasthebel zum Lösen der Rastverbindung. Bei besagter Anordnung sind die Rasthebel an der Hinterseite des Einfaßrahmens des abnehmbaren Mittelteils des Windschotts angeordnet. Dadurch ist ein Lösen der Rastverbindung von der Sitzposition innerhalb des Fahrzeuges aus schwierig. Zudem ist für die Bedienperson nicht eindeutig erkennbar, in welche Richtung die Rasthebel zum Lösen des Mittelteils verschwenkt werden müssen.

Aufgabe der Erfindung ist es, eine lösbare Rastverbindung für ein Mittelteil eines Windschotts so weiterzuentwickeln, das die lösbare Rastverbindung auch von der Sitzposition aus einfach lösbar ist und die Bedienung gut erkennbar ist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die Anordnung des Rasthebels am feststehenden Aufnahmeteil und einer Drucktaste zum Verschwenken des Rasthebels die Rastverbindung auch von der Sitzposition aus lösbar ist und daß zudem der Bedienkomfort zum Lösen der Rastverbindung wesentlich erhöht wird.

Alle beweglichen Teile der lösbaren Rastverbindung sind am feststehenden Aufnahmeteil vorgesehen. Der im Aufnahmeteil angebrachte Gummipuffer bewirkt eine klapperfreie Verriegelung zwischen Aufnahmeteil und Mittelteil und drückt das Mittelteil nach dem Lösen der Rastverbindung in eine Entnahmestellung. Die an der Oberseite des Aufnahmeteils angeordnete Drucktaste ist auch von den vorderen Sitzen aus gut erreichbar und die Betätigungsrichtung der Drucktaste zum Lösen der Rastverbindung ist eindeutig definiert.

Ein Ausführungsbeispiel der Erfindung ist in den Zeichnungen dargestellt und wird im folgenden näher beschrieben.

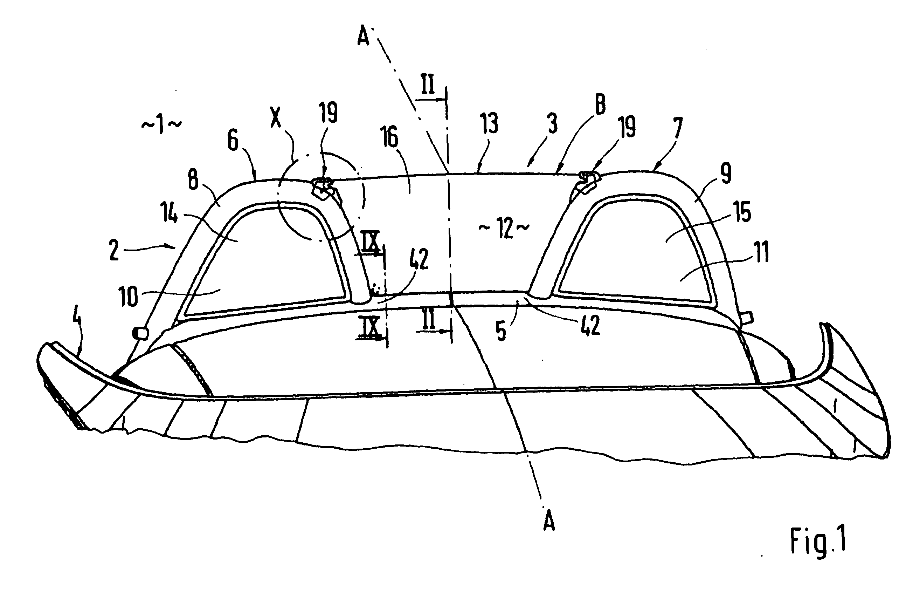

Es zeigen
- Fig. 1: eine perspektivische Ansicht von hinten auf einen feststehenden Überrollbügel eines offenen Kraftfahrzeuges (Cabriolet) mit einem am Überrollbügel angebrachten mehrteiligen Windschott,
- Fig. 2: einen Schnitt nach der Linie II-II der Fig. 1 durch die untere Steckverbindung zwischen dem Mittelteil des Windschotts und dem Überrollbügel, in größerer Darstellung,

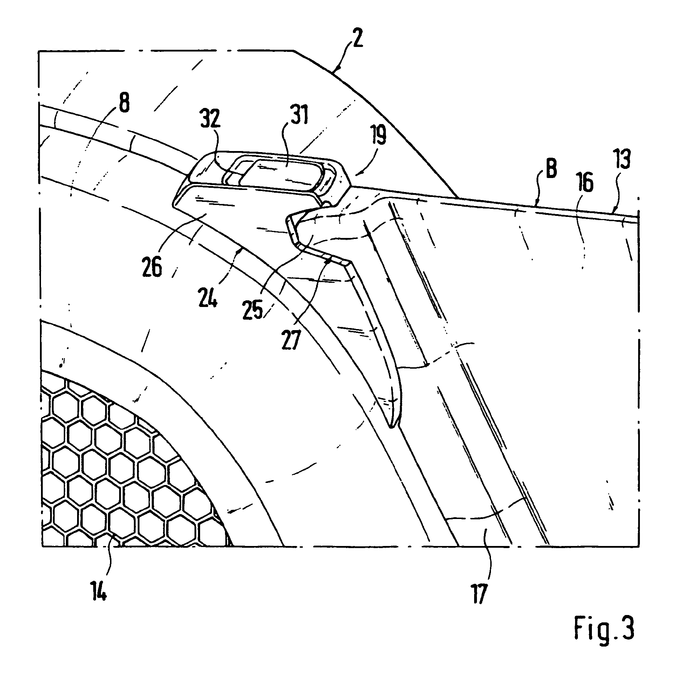

- Fig. 3: eine Einzelheit X der Fig. 1 in größerer Darstellung, die eine obere Rastverbindung zwischen dem Mittelteil des Windschotts und dem Überrollbügel zeigt,

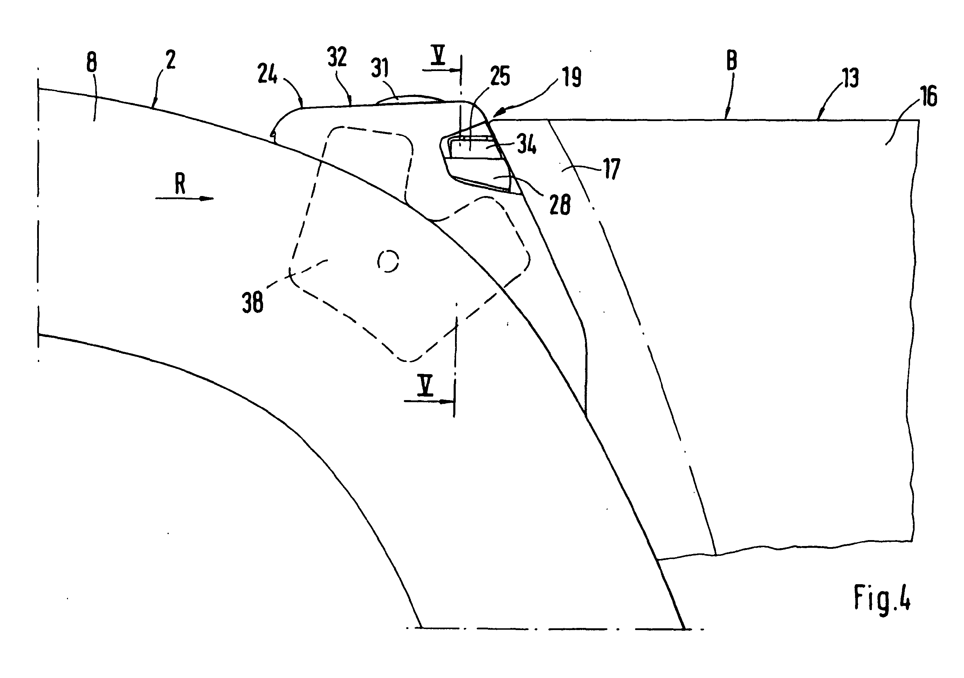

- Fig. 4: eine Ansicht von hinten auf die zwischen dem Überrollbügel und dem Mittelteil des Windschotts angeordnete lösbare Rastverbindung,
- Fig. 5: einen Schnitt nach der Linie V-V der Fig. 4,
- Fig. 6: eine Ansicht in Pfeilrichtung R der Fig. 4,
- Fig. 7: einen Schnitt der Linie VII-VII der Fig. 6,
- Fig. 8: eine perspektivische Darstellung von schräg hinten auf das feststehende Aufnahmeteil der lösbaren Rastverbindung,
- Fig. 9: einen Schnitt nach der Linie IX-IX der Fig. 1 in größerer Darstellung.

Ein nicht näher dargestelltes zweisitziges offenes Kraftfahrzeug (Cabriolet) weist hinter den vorderen Sitzen 1 einen feststehenden Überrollbügel 2 auf, wobei am Überrollbügel 2 ein Windschott 3 angebracht ist, durch das die auf den vorderen Sitzen 1 befindlichen Insassen vor von rückwärts her einströmender störender Luftströmung geschützt werden (unangenehme Zugerscheinungen im Kopf- bzw. Nackenbereich).

Der über aufrechte Stützabschnitte am Fahrzeugboden festgelegte Überrollbügel 2 weist etwa in Höhe der Fahrzeug-Gürtellinie 4 zumindest einen sich in Fahrzeugquerrichtung erstreckenden Rohrabschnitt 5 auf, der im Ausführungsbeispiel einen leicht gebogenen Formverlauf aufweist. In seitlich außenliegenden Bereichen 6 und 7 sind vom querverlaufenden Rohrabschnitt 5 zwei nach oben hin vorstehende Bügelabschnitte 8 bzw. 9 weggeführt. Jeder Bügelabschnitt 8 bzw. 9 begrenzt zusammen mit einem Teilbereich des querverlaufenden Rohrabschnitts 5 eine Öffnung 10 bzw. 11. Der Fahrzeugmittellängsebene A-A zugekehrte Bereiche der Bügelabschnitte 8 bzw. 9 und ein unterer mittlerer Bereich des Rohrabschnitts 5 definieren einen nach oben hin offenen Abschnitt 12 des Überrollbügels 2.

Das sich in aufrechter Richtung erstreckende Windschott 3 setzt sich aus einem Mittelteil 13 und zwei Seitenteilen 14 und 15 zusammen, wobei die Seitenteile 14, 15, in die Öffnungen 10 bzw. 11 der Bügelabschnitte 8 und 9 und das Mittelteil 13 in den Abschnitt 12 des Überrollbügels 2 eingesetzt sind.

Das Mittelteil 13 wird durch eine transparente, stehend angeordnete Scheibe 16 gebildet, die lösbar mit dem Überrollbügel 2 verbunden ist. Aus Gewichtsgründen ist die Scheibe 16 vorzugsweise aus geeignetem Kunststoff (z.B. Polycarbonat) hergestellt, wobei die Scheibe 16 mit einer kratzfesten Beschichtung und/oder einer Tönung versehen sein kann. Die Scheibe 16 kann jedoch auch aus Glas gefertigt sein. Am unteren Rand der Scheibe 16 und/oder an den beiden seitlich außenliegenden aufrechten Rändern der Scheibe 16 ist ein Einfaßrahmen 17 vorgesehen, der durch Kleben, Klipsen, Umspritzen oder dergleichen mit der eingesteckten Scheibe 16 verbunden ist.

Im Ausführungsbeispiel ist der Einfaßrahmen 17 einstückig mit der dreidimensional ausgebildeten Scheibe 16 verbunden, wobei beide Bauteile gleichfarbig ausgebildet sind oder aber auch unterschiedlich eingefärbt sein können.

Das Mittelteil 13 des Windschotts 3 ist über zumindest eine untere Steckverbindung 18 und zwei obere beabstandet angeordnete Rastverbindungen 19 in der Betriebsstellung B am Überrollbügel 2 in Lage gehalten.

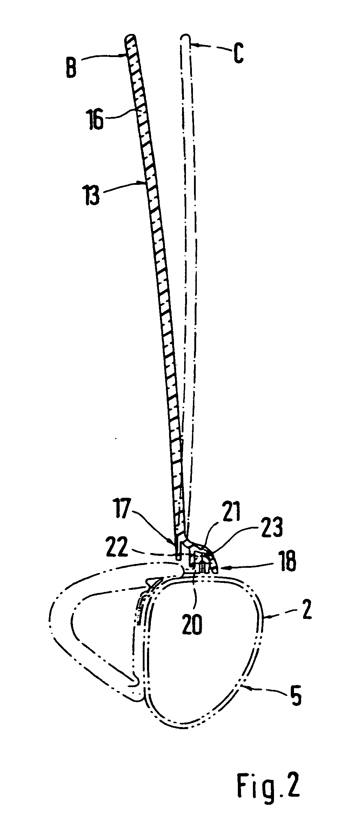

Die im Ausführungsbeispiel etwa im Bereich einer Fahrzeuglängsmittelebene A-A vorgesehene untere Steckverbindung 18 umfaßt ein Lagerelement 20 und eine mit diesem zusammenwirkende Aufnahme 21 (Fig. 2). Das Lagerelement 20 erstreckt sich oberhalb des querverlaufenden Rohrabschnitts 5 des Überrollbügels 2 und ist an einem Polster des Überrollbügels 2 befestigt. Gemäß Fig. 2 weist das Lagerelement 20 einen nach oben hin vorstehenden etwa halbkreisförmigen Lagerabschnitt 22 auf, der sich in Fahrzeugquerrichtung erstreckt und mit der korrespondierend ausgebildeten muldenförmigen Ausnehmung 23 des Einfaßrahmen 17 bei aufgesetztem Windschott-Mittelteil 13 in Wirkverbindung steht. Der Lagerabschnitt 22 und die Ausnehmung 23 sind so ausgebildet, daß eine Schwenkbewegung des Mittelteils 13 in geringem Umfang (z.B. etwa 15° ± 5°) bei der Montage möglich ist.

Das Mittelteil 13 wird im Ausführungsbeispiel bei der Montage von oben bzw. schräg hinten mit der Ausnehmung 23 auf den vorstehenden Lagerabschnitt 22 aufgesetzt (Entnahme- bzw. Einführstellung C). Nach dem Herstellen der unteren Steckverbindung 18 (Vorfixierung) wird das Mittelteil 13 um das untere Lagerelement 20 nach vorne geschwenkt, bis das Mittelteil 13 automatisch an den oberen Rastverbindungen 19 verrastet (Betriebsstellung B). In Fig. 2 ist die Betriebsstellung B mit durchgezogenen Linien und die Entnahme- bzw. Einführstellung C strichpunktiert dargestellt.

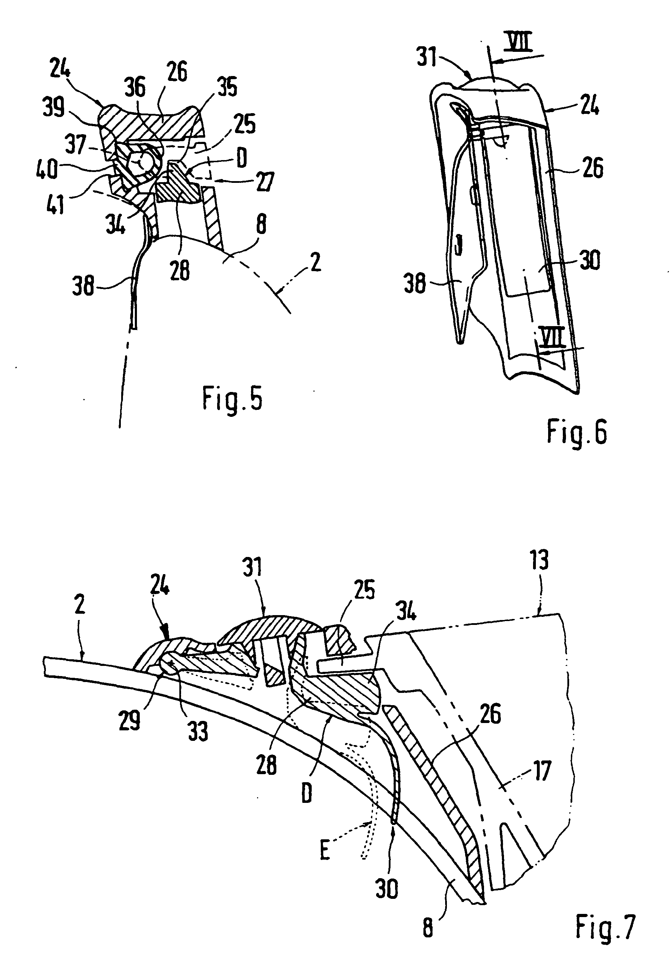

Jede Rastverbindung 19 umfaßt ein am angrenzenden Bügelabschnitt 8 bzw. 9 des Überrollbügels 2 befestigtes Aufnahmeteil 24, das bei montiertem Mittelteil 13 mit einem angeformten nockenförmigen Halteabschnitt 25 des Mittelteils 13 in Wirkverbindung steht. Das Aufnahmeteil 24 umfaßt ein hohlkörperartiges nach unten hin offenes Gehäuse 26, das eine Einführöffnung 27 für den seitlich vorstehenden nockenförmigen Halteabschnitt 25 des Mittelteils 13 aufweist. Innerhalb des Gehäuses 26 erstreckt sich ein federbeaufschlagter Rasthebel 28, der an seinem einen Ende 29 drehbar am Gehäuse 26 gelagert ist und der sich mit seinem gegenüberliegenden, blattfederartig ausgebildeten Ende 30 an der Außenseite des Bügelabschnitts 8 bzw. 9 des Überrollbügels 2 unter Vorspannung abstützt (Fig. 5 und 7).

Der Rasthebel 28 ist mittels einer Drucktaste 31 von einer Verriegelungsstellung D nach unten in eine Freigabestellung E verlagerbar. Nach dem Loslassen der Drucktaste 31 wird diese zusammen mit dem Rasthebel 28 durch das blattfederartige Ende 30 des Rasthebels 28 wieder nach oben gedrückt.

Im Ausführungsbeispiel ist an der Oberseite des Gehäuses 26 eine Aussparung 32 ausgebildet, die die Drucktaste 31 aufnimmt. Bei verriegeltem Mittelteil 13 steht die Drucktaste 31 gegenüber der oberen Kontur des Aufnahmeteils 24 geringfügig nach oben hin vor. Die Drucktaste 31 erstreckt sich benachbart der in Fahrzeuglängsrichtung verlaufenden Drehachse 33 des Rasthebels 28 und wird im Ausführungsbeispiel durch ein separates Bauteil gebildet, das mit dem Rasthebel 28 durch Klipsen oder dergleichen verbunden ist. Gemäß Fig. 7 liegt die Drucktaste 31 örtlich an der Oberseite des Rasthebels 28 auf und ist durch eine nicht näher dargestellte Klipsverbindung am Rasthebel 28 in Lage gehalten. Ein nach unten abgestellter Steg der Drucktaste 31 ist durch eine kraterförmige Aussparung des Rasthebels 28 hindurchgeführt und stützt sich mit einem endseitigen Hakenabschnitt an der Unterseite einer Wand des Rasthebels 28 ab (nicht näher dargestellt).

Die Drucktaste 31 könnte jedoch auch einstückig mit dem Rasthebel 28 verbunden sein. Im Bereich der Einführöffnung 27 ist am Rasthebel 28 eine nach oben hin vorstehende querverlaufende Rastnase 34 ausgebildet, die bei montiertem Mittelteil 13 in eine Aufnahmenut 35 des nockenförmigen Halteabschnitts 25 eingreift (Fig. 5). Auf der der Einführöffnung 27 abgekehrten Seite des Gehäuses 26 ist im Bereich der Einführöffnung 27 ein elastischer Gummipuffer 36 vorgesehen, der unter Vorspannung mit dem Randbereich 37 des nockenförmigen Halteabschnitts 25 des Mittelteils 13 zusammenwirkt. Der schlauchförmig ausgebildete, zusammengedrückte Gummipuffer 36 vermeidet Klappergeräusche bei eingesetztem Mittelteil 13 und sorgt außerdem dafür, daß bei entriegeltem Rasthebel 28 der nockenförmige Halteabschnitt 25 geringfügig aus der Einführöffnung 27 bewegt wird (Federwirkung). Das Aufnahmeteil 24 ist unter Vermittlung einer Nietlasche 38 am Überrollbügel 2 befestigt (z.B. vernietet).

Zum Lösen der Rastverbindung 19 muß lediglich die Drucktaste 31 geringfügig nach unten gedrückt werden, wodurch die Rastnase 34 des schwenkbar gelagerten Rasthebels 28 außer Eingriff mit der Aufnahmenut 35 des nockenförmigen Halteabschnitts des Mittelteils 13 gelangt. Gleichzeitig bewegt der Gummipuffer 36 den nockenförmigen Halteabschnitt in die Entnahmestellung C. Der Gummipuffer 36 ist in einer schwalbenschwanzförmigen Führung 39 des Gehäuses 26 gehalten und weist einen kreisförmigen Ansatz 40 auf, der in eine Öffnung 41 des Gehäuses 26 hineinragt (Fig. 5).

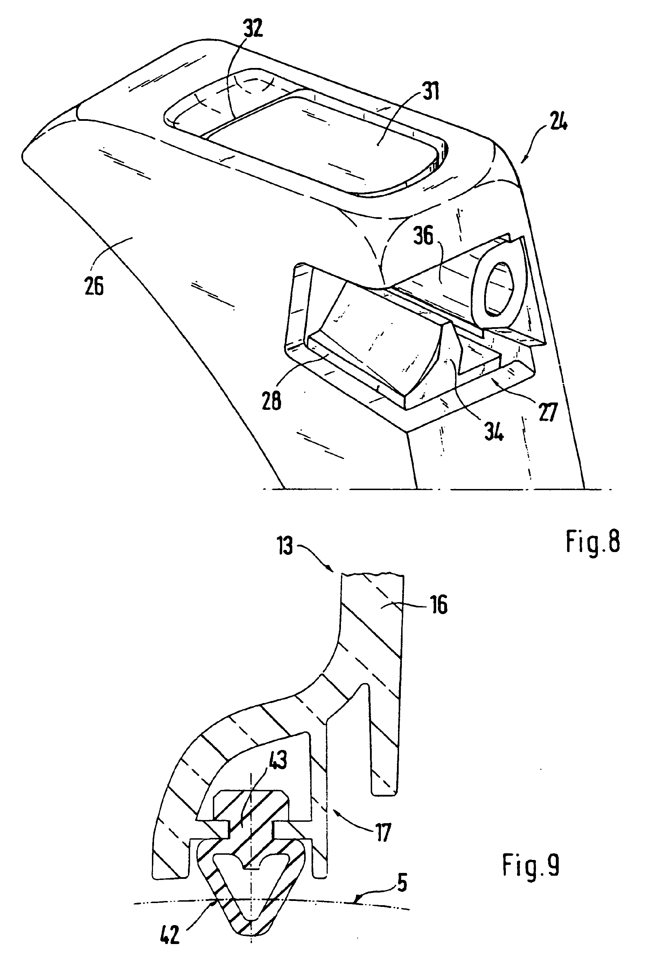

Zur klapperfreien Anbindung des Mittelteils 13 an den Überrollbügel 2 sind an der Unterseite des Einfaßrahmens 17 örtlich nach unten vorstehende elastische Abstützelemente 42 angeordnet, die sich unter Vorspannung an der Oberseite des querverlaufenden Rohrabschnitts 5 abstützen (Fig. 9).

Die länglichen aus Gummi gefertigten Abstützelemente 42 sind von der Seite her in hinterschnittene Aufnahmeabschnitte 43 des Einfaßrahmens 17 eingeschoben.

Im Ausführungsbeispiel sind zwei beabstandet angeordnete hohlkörperartige Abstützelemente 42 an der Unterseite des Mittelteils 13 vorgesehen.

## Patentansprüche

1. Windschott für ein Cabriolet mit einem Windschott-Mittelteil 13, das in seiner aufrechten Betriebsstellung (B) zwischen beabstandeten Bügelabschnitten eines Überrollbügels (8, 9), angeordnet und über lösbare Rastverbindungen (19) am Überrollbügel in Lage gehalten ist, wobei jede lösbare Rastverbindung (19) ein am Überrollbügel (8, 9) befestigtes Aufnahmeteil (24) umfaßt, das verrastend mit einem seitlich abgestellten Halteabschnitt (25) des Windschott-Mittelteils zusammenwirkt und daß die Rastverbindung (19) ferner einen schwenkbar gelagerten federbeaufschlagten Rasthebel (28) zum Lösen der Rastverbindung aufweist, **dadurch gekennzeichnet, daß** der Rasthebel (28) am feststehenden Aufnahmeteil (24) angeordnet ist und daß zum Verschwenken des Rasthebels (28) am Aufnahmeteil (24) eine mit dem Rasthebel (28) zusammenwirkende Drucktaste (31) vorgesehen ist.

2. Windschott nach Anspruch 1, **dadurch gekennzeichnet, daß** die Drucktaste (31) an der Oberseite des feststehenden Aufnahmeteils (24) angeordnet ist.

3. Windschott nach Anspruch 1, **dadurch gekennzeichnet, daß** der Rasthebel (28) innerhalb eines hohlkörperartigen Gehäuses (26) des Aufnahmeteiles (24) angeordnet ist.

4. Windschott nach einem der vorangegangenen Ansprüche, **dadurch gekennzeichnet, daß** ein oberes Ende (29) des Rasthebels (28) um eine in Fahrzeuglängsrichtung verlaufende Drehachse (33) schwenkbar am Gehäuse (26) gelagert ist und daß sich ein gegenüberliegendes, blattfederartig ausgebildetes Ende (30) des Rasthebels (28) unter Vorspannung an der Außenseite des Bügelabschnitts (8) bzw. (9) des Überrollbügels (2) abstützt.

5. Windschott nach einem der vorangegangenen Ansprüche, **dadurch gekennzeichnet, daß** die Drucktaste (31) mit Abstand zur Drehachse (33) am Rasthebel (28) angreift.

6. Windschott nach einem der vorangegangenen Ansprüche, **dadurch gekennzeichnet, daß** die Drucktaste (31) durch ein separates Bauteil gebildet wird, das mit dem Rasthebel (28) durch Klipsen oder dgl. verbindbar ist.

7. Windschott nach einem der vorangegangenen Ansprüche, **dadurch gekennzeichnet, daß** die Drucktaste (31) einstückig mit dem Rasthebel (28) ausgebildet ist.

8. Windschott nach einem der vorangegangenen Ansprüche, **dadurch gekennzeichnet, daß** im Bereich einer am Aufnahmeteil (24) angeordneten Einführöffnung (27) am Rasthebel (28) eine in Fahrzeugquerrichtung verlaufende Rastnase (34) ausgebildet ist, die bei montiertem Windschott-Mittelteil (13) in eine Aufnahmenut (35) des nockenförmigen Halteabschnitts (25) eingreift.

9. Windschott nach Anspruch 8, **dadurch gekennzeichnet, daß** innenseitig am Gehäuse (26) im Bereich der Einführöffnung (27) ein elastischer Gummipuffer (36) angeordnet ist, der mit einem Randbereich (37) des nockenförmigen Halteabschnitts (25) zusammenwirkt.

10. Windschott nach einem der vorangegangenen Ansprüche, **dadurch gekennzeichnet, daß** das Windschott-Mittelteil (13) eine dreidimensional ausgebildete Scheibe (16) und einen einstückig mit der Scheibe (16) verbundenen Einfaßrahmen (17) aus Kunststoff umfaßt, wobei am Einfaßrahmen (17) örtlich die nockenförmigen Halteabschnitte (25) angeformt sind.

## Claims

1. A windstop for a cabriolet, with a windstop middle part (13) which, in its upright operating position (B), is arranged between spaced bar portions of a roll bar (8, 9) and is held in position on the roll bar by releasable locking connections (19), wherein each releasable locking connection (19) comprises a receiving part (24) which is fixed to the roll bar (8, 9) and co-operates in a locking manner with a laterally offset holding portion (25) of the windstop middle part, and wherein the locking connection (19) also has a pivotably mounted, spring-loaded locking lever (28) for releasing the locking connection, **characterised in that** the locking lever (28) is arranged on the stationary receiving part (24) and **in that**, for pivoting the locking lever (28) on the receiving part (24), a push-button (31) cooperating with the locking lever (28) is provided.

2. A windstop according to claim 1, **characterised in that** the push-button (31) is arranged on the upper side of the stationary receiving part (24).

3. A windstop according to claim 1, **characterised in that** the locking lever (28) is arranged inside a housing (26) of the receiving part (24), the housing (26) being in the form of a hollow body.

4. A windstop according to any one of the preceding claims, **characterised in that** an upper end (29) of the locking lever (28) is mounted on the housing (26) so as to be pivotable about a rotation axis (33) extending in the longitudinal direction of the vehicle, and **in that** an opposite end (30) of the locking lever (28) is formed in the manner of a leaf spring and is supported under prestress against the outside of the bar portion (8) or (9) of the roll bar (2).

5. A windstop according to any one of the preceding claims, **characterised in that** the push-button (31) engages the locking lever (28) at a distance from the rotation axis (33).

6. A windstop according to any one of the preceding claims, **characterised in that** the push-button (31) is formed by a separate component which is connectable to the locking lever (28) by clipping or the like.

7. A windstop according to any one of the preceding claims, **characterised in that** the push-button (31) is formed in one piece with the locking lever (28).

8. A windstop according to any one of the preceding claims, **characterised in that**, in the region of an insertion opening (27) provided in the receiving part (24), a locking projection (34) extending in the transverse direction of the vehicle is formed on the locking lever (28) and engages in a receiving groove (35) in the cam-shaped holding portion (25) when the windstop middle part (13) is installed.

9. A windstop according to claim 8, **characterised in that** a resilient rubber buffer (36) is arranged on the inside of the housing (26) in the region of the insertion opening (27) and co-operates with an edge region (37) of the cam-shaped holding portion (25).

10. A windstop according to any one of the preceding claims, **characterised in that** the windstop middle part (13) comprises a three-dimensionally formed plate (16) and a mounting frame (17) which is integrally connected to the plate (16) and made of a plastics material, wherein the cam-shaped holding portions (25) are locally formed on the mounting frame (17).

## Revendications

1. Coupe-vent pour un cabriolet, comportant une partie centrale (13) de coupe-vent qui, dans sa position de service (B) verticale, est montée entre deux arceaux de sécurité, écartés l'un de l'autre, d'une structure de protection contre les tonneaux (8, 9) et est maintenue en position contre la structure de protection contre les tonneaux par l'intermédiaire de liaisons à encliquetages (19) amovibles, chaque liaison à encliquetage (19) amovible comportant une partie de fixation (24), qui est fixée contre la structure de protection contre les tonneaux (8, 9) et qui coopère par blocage avec une partie de retenue (25) en saillie latérale sur la partie centrale du coupe-vent et la liaison à encliquetage (19) comportant en outre un levier (28) pivotant, sollicité par ressort et destiné à désolidariser la liaison à encliquetage (19), **caractérisé en ce que** le levier (28) est monté sur la partie de fixation (24) fixe et **en ce que**, pour le pivotement du levier (28), il est prévu sur la partie de fixation (24) une touche de pression (31) coopérant avec le levier (28).

2. Coupe-vent selon la revendication 1, **caractérisé en ce que** la touche de pression (31) est agencée sur le côté supérieur de la partie de fixation (24) fixe.

3. Coupe-vent selon la revendication 1, **caractérisé en ce que** le levier (28) est monté à l'intérieur du boîtier (26) en forme de corps creux de la partie de fixation (24).

4. Coupe-vent selon l'une quelconque des revendications précédentes, **caractérisé en ce qu'**une extrémité supérieure (29) du levier (28) est montée pivotante sur le boîtier (26) autour d'un axe de rotation (33) orienté dans le sens longitudinal du véhicule, et **en ce qu'**une extrémité (30) opposée du levier (28), réalisée en forme de ressort à lame, est en appui sous précontrainte sur la face extérieure de l'arceau de sécurité (8) ou (9) de la structure de protection contre les tonneaux (2).

5. Coupe-vent selon l'une quelconque des revendications précédentes, **caractérisé en ce que** la touche de pression (31), à distance de l'axe de rotation (33), entre en prise avec le levier (28).

6. Coupe-vent selon l'une quelconque des revendications précédentes, **caractérisé en ce que** la touche de pression (31) est formée par une pièce séparée qui peut être assemblée au levier (28) par des clips ou éléments similaires.

7. Coupe-vent selon l'une quelconque des revendications précédentes, **caractérisé en ce que** la touche de pression (31) est réalisée d'un seul tenant avec le levier (28).

8. Coupe-vent selon l'une quelconque des revendications précédentes, **caractérisé en ce que**, dans la zone d'une ouverture d'introduction (27), réalisée dans la partie de fixation (24), un bec d'arrêt (34) orienté dans le sens transversal du véhicule est réalisé sur le levier (28) et, lorsque la partie centrale (13) du coupe-vent est en position montée, s'engage dans une rainure (35) de la partie de retenue (25) en forme de téton.

9. Coupe-vent selon la revendication 8, **caractérisé en ce que** sur la face intérieure du boîtier (26), dans la zone de l'ouverture d'introduction (27), est agencé un tampon de caoutchouc (36), qui coopère avec un bord (37) de la partie de retenue (25) en forme de téton.

10. Coupe-vent selon l'une quelconque des revendications précédentes, **caractérisé en ce que** la partie centrale (13) du coupe-vent comporte une vitre (16) de forme tridimensionnelle et un cadre (17) en matière plastique, assemblé d'un seul tenant à la vitre (16), les parties de retenue (25) en forme de téton étant formées localement sur le cadre (17).
